# EUROPEAN PATENT SPECIFICATION

(11) **EP 0 372 592 B1**
(45) Date of publication and mention of the grant of the patent: **28.06.1995**
(21) Application number: 89202521.4
(22) Date of filing: 06.10.1989
(51) Int. Cl.: G06F 3/023, B41J 3/36

(54) **Small-size device for entering characters, and method therefor**
Vorrichtung mit geringer Abmessung zur Zeicheneingabe und Verfahren dafür
Dispositif de petite taille pour introduire des caractères et méthode utilisée à cet effet

(30) Priority: 07.10.1988 JP 254374/88
(43) Date of publication of application: 13.06.1990
(73) Proprietor: Hirose, Tokuzo, Ashiya-shi Hyogo-ken (JP)
(72) Inventor: Hirose, Tokuzo, Ashiya-shi Hyogo-ken (JP)
(74) Representative: Smulders, Theodorus A.H.J., Ir.

(56) References cited:
- DE-A- 3 240 386
- DE-A- 3 318 622
- GB-A- 2 149 946
- GB-A- 2 156 552
- US-A- 4 737 040
- PATENT ABSTRACTS OF JAPAN vol. 12, no. 105 (M-681)(2952)6 April 1988 & JP-A-62 234 959 ( ALPINE ELECTRON INC. ) 15 October 1987
- PATENT ABSTRACTS OF JAPAN vol. 7, no. 35 (P-175)(1180) 10 February 1983 & JP-A-57 187 735 ( SHARP K. K. ) 18 November 1982
- I.E.E.E. MICRO vol. 7, no. 2, April 1987, NEW YORK, USA pages 8 - 14; KEN SAKAMURA: 'The TRON project'

## Description

The invention relates to a character input device comprising: a flat housing defining a planar top surface and a plurality of side surfaces; a character input panel located on said planar top surface of said flat housing, said character input panel including a plurality of character input pads each having indicia thereon corresponding to characters, said character input pads extending in rows along said length of said top planar surface and in columns along said width of said top planar surface; a contact pen having an elongated shape and first and second end portions, said first end portion having a rounded end point for individually contacting said plurality of character input pads; a plurality of switch means, respectively coupled to and associated with said plurality of character input pads and located within said flat housing for switching in response to contact between an associated one of said plurality of character input pads and said rounded end point of said contact pen; a display means, located within said flat housing, for displaying on a display panel the characters corresponding to the plurality of character input pads which have made contact with said rounded end point of said contact pen, a processor means, coupled to said display means and to said plurality of switch means and located within said flat housing, for controlling the display of the characters by said display means in response to the switching of said plurality of switch means.

Such a character input device is disclosed in DE-A-3,318,622, which discloses an electronic calculator with a numeric character input panel comprising a number of character input pads which can be activated by means of the point of a contact pen, such as a ballpoint. By placing this calculator on a writing pad, the operator can operate the input pads with the ballpoint and, only by turning his wrist, can write down the calculating results, as shown on the display of the calculator, on the note pad.

The speed for writing alphanumeric characters with a pencil in a person's hand is comparatively slow. Though a person is accustomed to writing characters by using a pencil, etc., the writing speed has a limit inherently and it is difficult to write characters at a remarkably high speed.

Currently, an alphanumeric input device which is commercially available is composed of many keys which are pushed down by fingers of a person and is operated by using a single hand or both hands. Such an alphanumeric character input device as shown in the above has been already known to the public, for instance, in a conventional computer input device, a typewriter, a word processing machine, etc. There is a limit in the character inputting speed even in these prior arts. It is much desired that the character inputting speed is accelerated.

It is an object of the present invention to provide a small-sized character inputting device activated by a touch pen, a small-sized typewriter activated by a touch pen, and a sentence editing device activated by a touch pen, which are so composed that the character inputting speed can be significantly increased.

The invention therefore provides a character input device according to the preamble of claim 1, characterized in that the characters are alphanumeric characters and that each of said character input pads has a length between 2 mm and 5 mm inclusive and a width between 2 mm and 5 mm inclusive, and wherein a distance between adjacent character input pads is between 0 mm and about 1 mm, wherein respective character input pads, which include indicia denoting each vowel character A, E, I, O and U, are aligned in a row or column, and wherein respective character input pads, which include indicia denoting each consonant character, are aligned in columns or rows, beneath or beside each respective vowel character, respectively; that memory means are provided which are coupled to said processing means and located within said flat housing, for storing the alphanumeric characters corresponding to the plurality of character input pads which have made contact with said rounded end point of said contact pen; and that output terminal means are provided which are coupled to said processing means and having terminals located at a side surface of said flat housing, for detachably electrically connecting to an output device and for outputting the alphanumeric characters stored in said memory means to the output device, said processor means including means for controlling said memory means and said output terminal means.

The invention further provides a character input apparatus comprising: a portable character input device comprising a flat housing defining a planar top surface and a plurality of side surfaces of the housing; a character input panel located on said planar top surface of said flat housing, said character input panel including a plurality of character input pads each having indicia thereon corresponding to characters, said character input pads extending in rows along said length of said top planar surface and in columns along said width of said top planar surface; a contact pen having an elongated shape and first and second end portions, said first end portion having a rounded end point for individually contacting said plurality of character input pads; a plurality of switch means, respectively coupled to and associated with said plurality of character input pads and located within said flat housing for switching in response to contact between an associated one of said plurality of character input pads and said rounded end point of said contact pen; a display means, located within said flat housing, for displaying on a display panel the characters corresponding to the plurality of character input pads which have made contact with said rounded end point of said contact pen, said display panel being located on said planar top surface of said flat housing; a processor means, coupled to said display means and to said plurality of switch means and located within said flat housing, for controlling the display of the characters by said display means in response to the switching of said plurality of switch means; characterized in that the characters are alphanumeric characters and that each of said character input pads has a length between 2 mm and 5 mm inclusive and a width between 2 mm and 5 mm inclusive, and wherein a distance between adjacent character input pads is between 0 mm and about 1 mm, wherein respective character input pads,which include indicia denoting each vowel character A, E, I, O and U, are aligned in a row or column, and wherein respective character input pads,which include indicia denoting each consonant character, are aligned in columns or rows, beneath or beside each respective vowel character, respectively; that memory means are provided which are coupled to said processing means and located within said flat housing, for storing the alphanumeric characters corresponding to the plurality of character input pads which have made contact with said rounded end point of said contact pen; and that output terminal means are provided which are coupled to said processing means and having terminals located at a side surface of said flat housing, for detachably electrically connecting to the output device and for outputting the alphanumeric characters stored in said memory means to the output device, said processor means including means for controlling said memory means and said output terminal means; and in that the alphanumeric characters input apparatus further comprises: an output device for detachably electrically connecting to said portable alphanumeric character input device and for reading alphanumeric characters stored in said portable alphanumeric character input device, said output device including a housing having an aperture formed in a surface thereof, said aperture dimensioned to receive said portable alphanumeric character input device, said output device further including a display for displaying the alphanumeric characters read from said portable alphanumeric character input device; and a printer device, operatively coupled to said output device for printing the alphanumeric characters read by said output device.

According to the invention, an alphanumeric input device is operated by touching or pushing a plurality of character inputting switches with the tip end of a contact pen, that is, a touch pen. An operator grasps the contact pen with his more coordinated hand, that is, either his right hand or his left hand, and characters are input by using the tip end of the contact pen, with the lower part of his hand, in which the contact pen is grasped, placed at a predetermined position, thereby he does not need to move his hand much: He may input characters under the same condition as when he holds a pencil. Therefore, it is possible to input characters at a higher speed. An inputting speed, which is for instance twice the speed that can be obtained with a typewriter, can be accomplished.

According to the invention, it is possible to accelerate the inputting speed by making the character inputting area small and by having the operator grasping the tip end of the contact pen, that is, by holding the contact pen shortly.

The character inputting device according to the invention is small-sized and the weight thereof is reduced. Therefore, it is possible to carry the device for instance in a pocket.

Still further, character information inputted by the character inputting means according to the invention can be outputted by using liquid crystal display means, means for printing on a recording sheet or voice reproducing means.

According to the invention, since it is possible to store the character input information in a memory, the information in the memory can be outputted with time delay after inputting. The character inputting device according to the invention can be made small in size when it is provided with memory means without output means. Thus, the character inputting means according to the invention can be used as a memorandum pad.

As the character inputting panel is small in size, it is difficult to read the inputted characters displayed thereon, the character inputting device may be composed so that a magnifying glass can be adopted therewith. This is very preferable especially for the old.

Still further according to the invention, since the vowel letters are arranged and concentrated at a point, i.e., the right or left side of the character inputting panel, it is easy to find out a specified character, thereby accelerating the character inputting speed.

Moreover, according to the invention, it is possible to input characters with the lower part of the hand placed on a desk top such as a table on which the character inputting device is placed or on a hand placement position of the character input device.

According to the invention, character inputting can be processed at a remarkably high speed, for example, it is possible to accelerate the character inputting speed, for instance, twice or more in comparison with the case of using a conventional writing device or the case of operating the conventional key board.

### BRIEF DESCRIPTION OF THE DRAWINGS

These and other objects, features and advantages of the invention will become more apparent from the ensuing description taken in conjunction with the accompanying drawings, in which;
Fig. 1 is a perspective view showing the entire device of one of the preferred embodiments of the invention,
Fig. 2 is a plane view of the character inputting unit,
Fig. 3 is an enlarged plane view of the character inputting panel,
Fig. 4 is a partially enlarged plane view of the character inputting panel,
Fig. 5 is a perspective view of an output device,
Fig. 6 is a block diagram showing the electrical configuration of the character inputting unit,
Fig. 7 is a flow chart for explaining the operation of a processing circuit 32 of the character inputting unit,
Fig. 8 is a block diagram showing the electrical configuration of the output device,
Fig. 9 is a plane view of a character inputting unit of another embodiment of the invention,
Fig. 10 is a plane view of the character inputting panel of another embodiment of the invention,
Fig. 11 is a perspective view of still another embodiment of the invention,
Fig. 12 is a perspective view showing the input operating state for using the character inputting means shown in Fig. 11,
Fig. 13 is a block diagram showing the electrical configuration of the embodiment shown in Figs. 11 and 12,
Fig. 14 is a flow chart for explaining the operations of the processing circuit shown in Fig. 13,
Fig. 15 is an enlarged plane view of the character inputting panels of another embodiment of the invention,
Fig. 16 is a simplified perspective view of the character inputting unit of another embodiment of the invention,
Fig. 17 is a plane view showing a configuration in which the character inputting unit and the output unit, which are in a still another embodiment of the invention, are integrally mounted in a single housing, and
Fig. 18 is a plane view showing a still another embodiment of the invention.

### DETAILED DESCRIPTION OF THE PREFERRED EMBODIMENT

The ensuing description explains the preferred embodiments of the invention in conjunction with the drawings attached hereto.

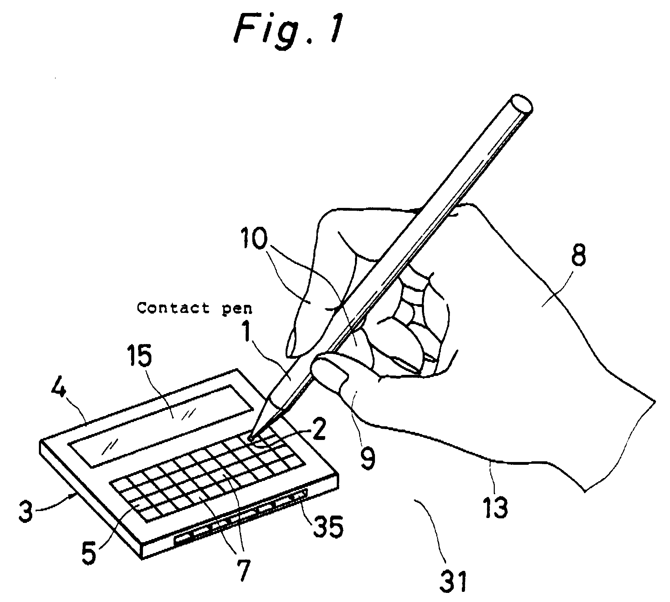

Fig. 1 is a perspective view of one of the preferred embodiments of the invention. A contact pen 1 is dimensioned and shaped similar to for example a pencil, a ballpoint pen and/or a fountain pen, and the tip end 2 thereof is rounded as shown. That is, the tip end 2 thereof is not overly pointed, thereby preventing damage to the character inputting panel 5. The contact pen 1 as shown may be made of a metal or an artificial resin.

A flat rectangular shaped housing 4 of the character inputting unit 3 is provided with a character inputting panel 5. The tip end 2 of the contact pen 1 is selectively made to contact and apply pressure to the character inputting switches 7, which are provided in the character inputting panel 5, thereby resulting in each character of each switch 7 to be inputted.

The above inputting operation is carried out with the lower part of the hand placed on a table or desk top area 31 on which the character inputting unit 3 is placed.

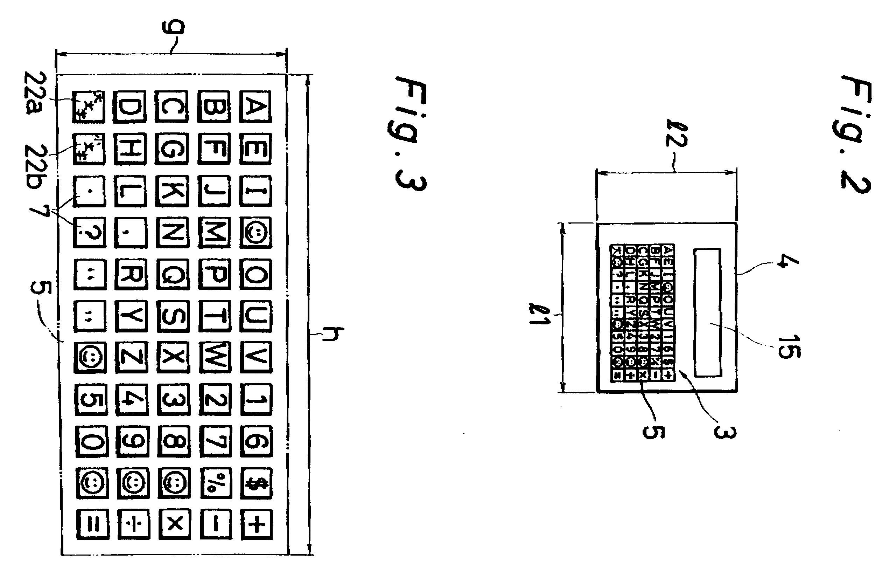

Fig. 2 is a plane view showing the character inputting unit 3. In this embodiment, the housing 4 is provided with a character inputting panel 5 and an output display 15, such as a liquid crystal display, and the hand in which a contact pen is grasped is placed on the table or desk top 31 on which the housing 4 is placed. As an example, the dimension of the casing 4 is 8.5 cm for "ℓ1" and 5.4 cm for "ℓ2", the size being roughly that of a credit card.

Fig. 3 is an enlarged plane view of the character inputting panel 5. The vowels of the alphabet are arranged longitudinally at the upper portion of the character inputting panel 5, thereby allowing these letters to be easily located during inputting of characters and further allowing Japanese to be easily inputted using Roman letters. In addition, other character inputting switches are provided for other input figures and symbols. Frequently used characters and symbols are arranged on the left side of the panel shown in Fig. 3, and those which are not frequently used are arranged on the right side. The longitudinal length "g" of the character inputting panel 5 is, for example three to five centimeters, and the horizontal length "h" thereof may be within the same range. Additionally, the character inputting panel 5 may be provided with function keys (eg. shift keys) 22a and 22b for selecting the capital letters or the small letters of the alphabet.

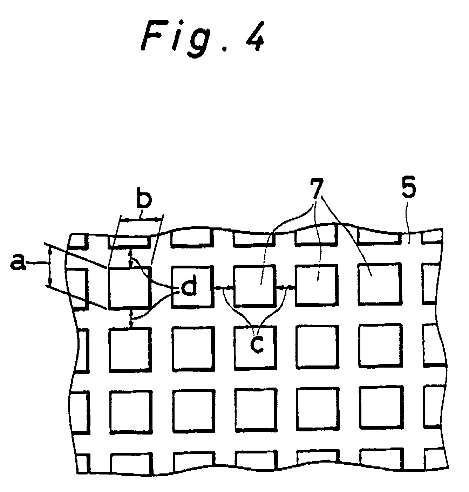

Fig. 4 is a partially enlarged perspective view of the character inputting panel 5. Each character inputting switch 7 has an operating area whose size is "a" long x "b" wide, and each operating area is activated by using the tip end 2 of the contact pen 1. The intervals between adjacent operating areas of the character inputting switches 7 are shown by reference letters "c" and "d", and are selected to prevent erroneous operation of adjacent character inputting switches 7.

For example, "a" may be equal to "b", and both "a" and "b" are 2 to 3 mm and 5 mm at most. Preferably "a" and "b" each are 3 mm. Furthermore for example, "c" may be equal to "d", and both "c" and "d" may be zero or about 1 mm.

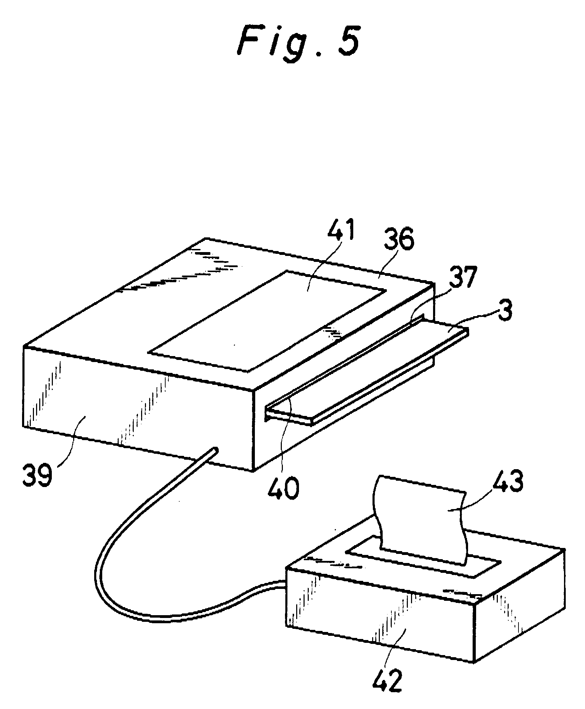

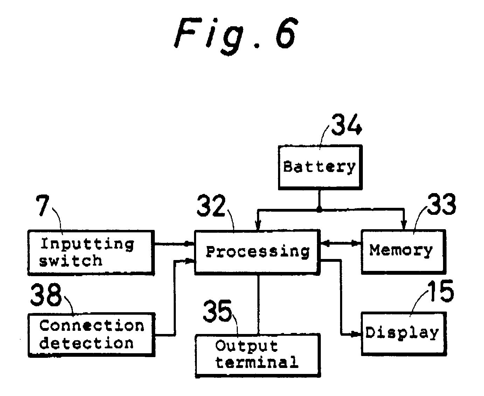

Fig. 6 is a block diagram showing the electrical configuration of the character inputting unit 3. The outputs from the inputting switches 7 are provided to a processing circuit 32, realized by a micro computer, and this inputted data is stored in a random access memory 33. The processing circuit 32 and the memory 33 are powered by a battery 34. An output terminal 35 is provided at a side of the housing 4 and the data stored in the memory 33 is read out by the processing circuit 32. The data read out by the processing circuit 32 is outputted via the output terminal 35. The connection detecting part 38, provided in the vicinity of the output terminal 35, detects when output terminal 35 is connected to an input terminal 37 of the output unit 36 shown in Fig. 5. The connection detecting part 38 is built in the housing 4. The display means 15 is for visual display of the data inputted by the inputting switch 7 and stored in the memory 33 on the instruction of the processing circuit 32, the display means 15 being realized as a liquid crystal display device.

Fig. 5 is a perspective view of the output device 36 for visually displaying and printing of data stored in the memory 33 of the character inputting unit 3. The output terminal 35 of the character inputting unit 3 is connected to the input terminal 37 of the output device 36. This input terminal 37 is realized by the insertion slot 40 of the housing 39 of the output device 36. The data read out from the memory 33 is displayed on the liquid crystal display 41 and is printed on a recording sheet 43 using a printer 42. The data stored in the memory 33 may be edited and processed for operation in the output device 36.

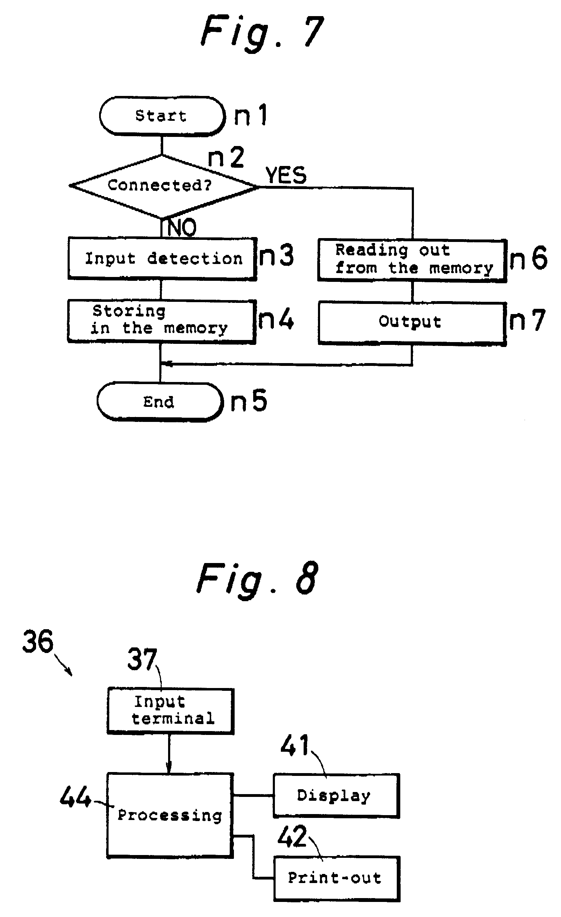

Fig. 7 is a flow chart for explaining the operations of the character inputting unit 3. The operation proceeds from the step n1 to the step n2, wherein the processing circuit 32 judges whether or not the output terminal 35 is connected to the input terminal 37, in accordance with the output of the connection detecting part 38. When the output terminal 35 is not connected to the input terminal 37, the input of data through the operation of the inputting switches 7 is detected at step n3 by the processing circuit, and the inputted data is stored in the memory 33 at step n4.

In the case where the output terminal 35 of the character inputting unit 3 is connected to the input terminal 37 of the output device 36, as detected by the connection detecting part 38, the processing proceeds from step n2 to step n6. The data stored in the memory 33 is read out at step n6 by the processing circuit 32 and is output on the output terminal 35 at step n7.

Fig. 8 is a block diagram showing the configuration of the output device 36. The data from the input terminal 37 is provided to the processing circuit 44, realized by a micro computer, in which a sentence may be edited or other data processed. The data is displayed by the display 41 as shown above or is printed on a recording sheet 43 using a printer 42.

Again with reference to Fig. 1, the contact pen 1 is grasped by the thumb 9, the forefinger 10 and the middle finger 11 of the right hand 8 of an operator assuming the operator is right-handed. The lower part 13 of the hand is placed on the table 31 and the inputting panel 5 with the character inputting switches 7 is arranged such that the tip end 2 of the contact pen 1 can be easily moved along the entire panel 5 with the lower part 13 of the hand 12 placed on the table 31.

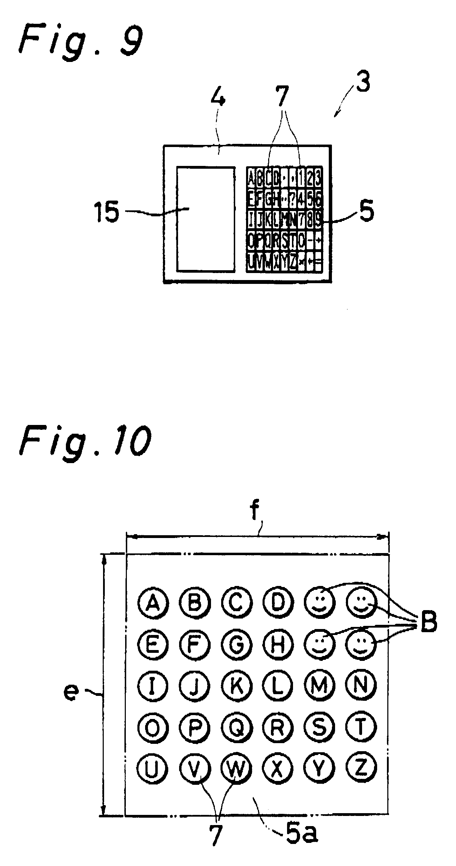

Fig. 9 is a plane view showing still another embodiment of the invention. The characters inputting panel 5 is formed at the right side of the housing 4, and the output device 15, such as a liquid crystal display panel, is arranged at the left side of the character inputting panel 5. Since the character inputting panel 5 is arranged at the right side, the character inputting operation can be conducted with the housing 4 placed on the desk top of the table 31 the lower part of the hand grasping the contact pen on the table 31.

Fig. 10 is a plane view showing the character inputting panel 5a of another embodiment of the invention. The vowel letters are arranged vertically at the left side of the character inputting panel 5a. The longitudinal length "e" of the character inputting panel 5a may be, for instance, three centimeters, and the horizontal length "f" may be also three centimeters. In addition, unused areas of the character inputting switches 7 may be provided with a blank symbol as shown by the reference symbol "B" in Fig. 10.

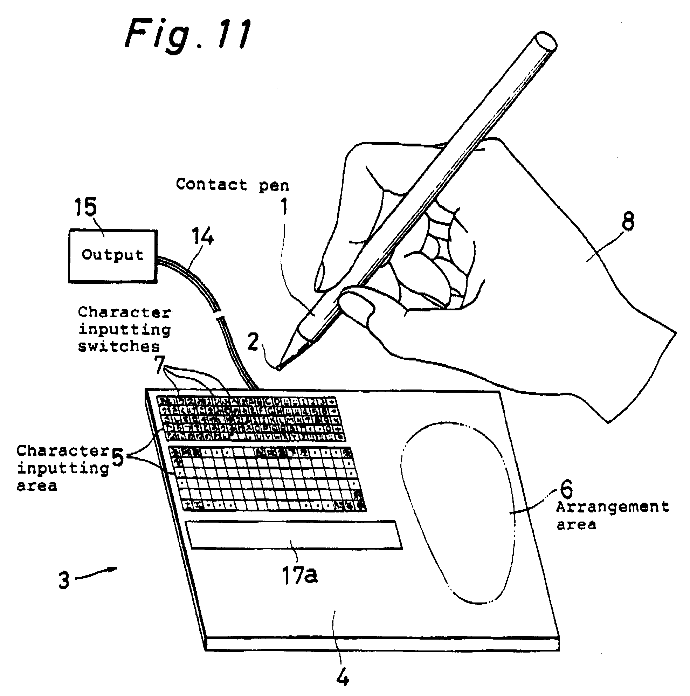

Fig. 11 is a perspective view of still another embodiment of the invention. This embodiment is similar to that previously described above. All the corresponding parts carry the same reference number. In this embodiment, particularly, the character inputting panel 5 is composed so that Japanese or Chinese characters can be inputted. The housing 4 is provided with a hand placement area 6. When inputting data, the lower part of the hand 8 is placed on the hand placement area 6, and the inputting operation is effected using the contact pen 1.

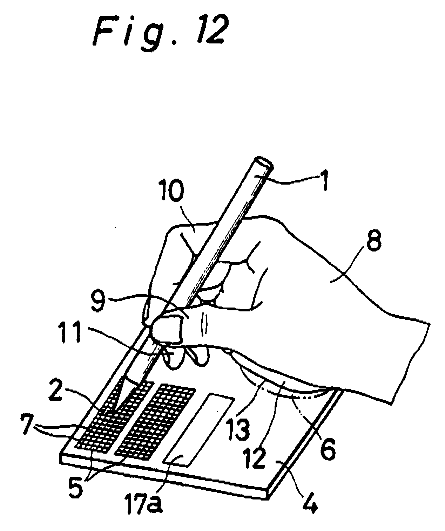

Fig. 12 shows the inputting operation by using the character inputting unit 3 shown in Fig. 11. Each input switch 7 of the character inputting area 5 is operated in response to pressure applied by the tip end 2 of the contact pen 1.

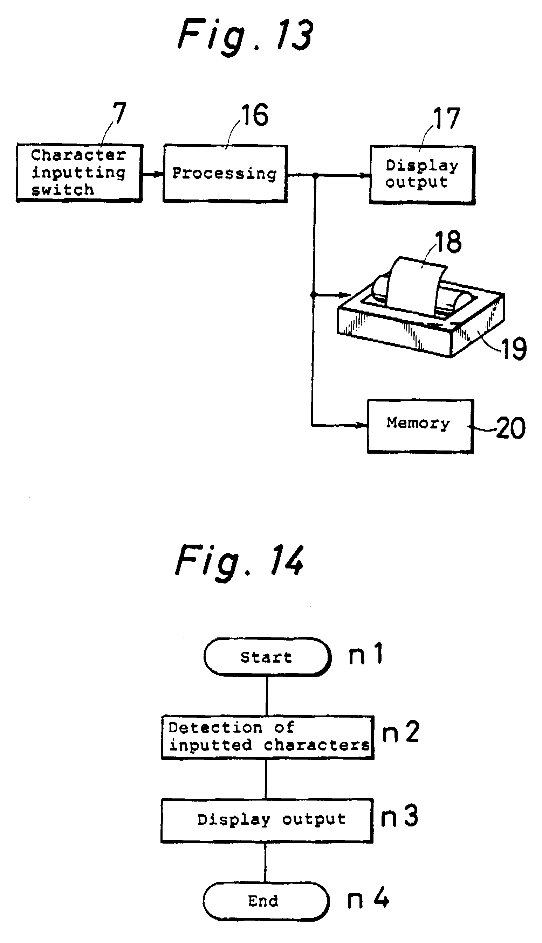

Fig. 13 is a block diagram showing the electrical configuration of the embodiment shown in Figs. 11 and 12. The input from the character inputting switches 7 is detected by a processing circuit 16 realized by a micro computer built in the housing 4, and the character input information is displayed by the output device 15. The output device 15 may be a visual display 17 such as a liquid crystal or a cathode ray tube, or it may be a printing unit 19 by which the data is printed on a recording sheet 18. Alternately, the character information inputted from the character inputting panel 5 is transferred to a memory 20, like a magnetic recording medium such as a random access memory or a floppy disk, where it may be temporarily stored.

A processing circuit 16 may be incorporated in the housing 4. At the same time, the visual display means 17 may be provided in the position shown by the area 17a, thereby causing the memory 20 to be housed. Still furthermore, the printing unit 19 may be adopted in the housing 4.

Fig. 14 is a flow chart for explaining the operations of the processing circuit 16. The processing proceeds from the step n1 to the step n2, and the character input information inputted by an operator using the character inputting panel 5 is detected by the processing circuit 16. At step n3, the inputted data is outputted by the output device 15. The output device 15 may be composed so that the inputted character information can be outputted in voice format. In this case, the output device 15 includes a voice composing circuit.

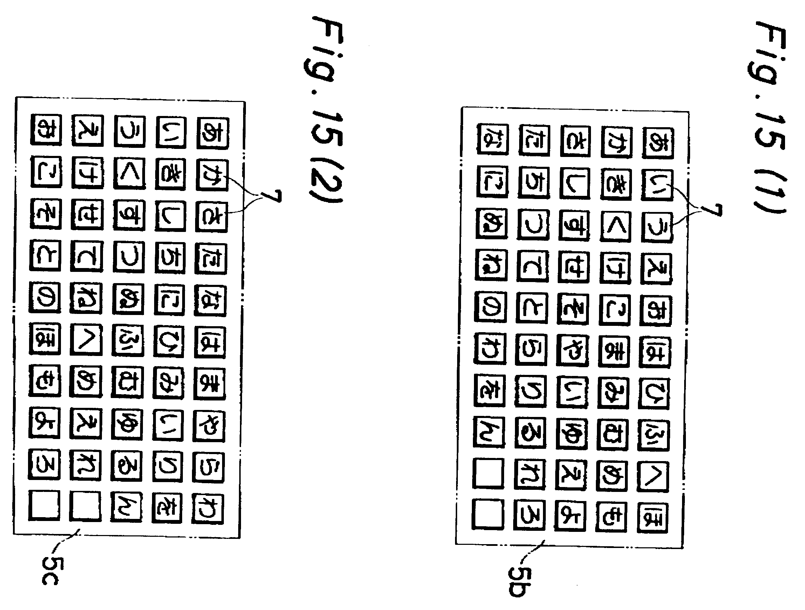

Fig. 15 is an enlarged plane view of the character inputting panels 5b and 5c of another embodiment of the invention. In Fig. 15 (1), the vowel letters are arranged at the upper portion of the character input panel 5b. On the other hand, in Fig. 15 (2), the vowel letters are arranged at the left side of the character inputting panel 5c.

Also, the vowel letters may be arranged at the right side or at the lower portion of the character inputting panels 5, 5a through 5c. Characters to be inputted may be Japanese KATAKANA and KANJI letters or graphic figures, in addition to alphanumeric letters and Japanese HIRAGANA letters as shown above.

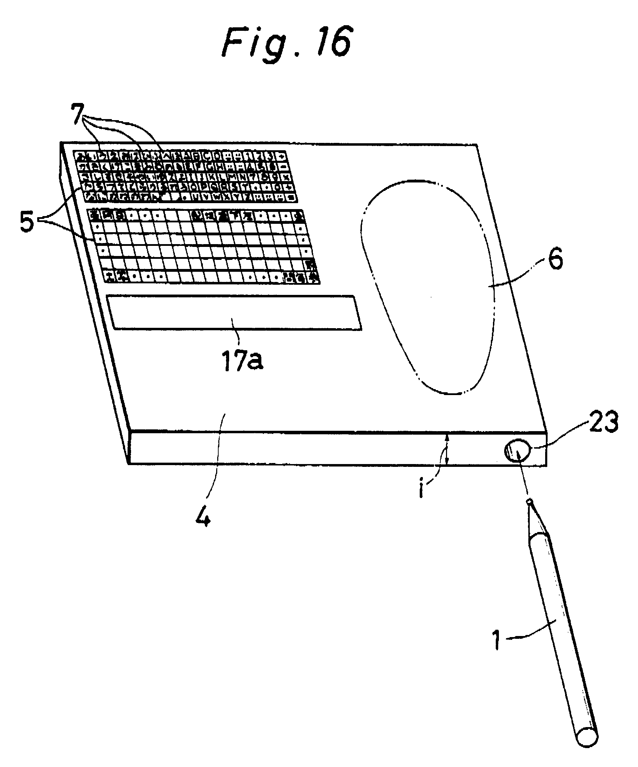

Fig. 16 is a perspective view of still another embodiment of the invention. In this embodiment, the housing 4 has a comparatively large thickness "i", and an accommodation aperture 23 having a cylindrical inner diameter is is formed in the housing 4. The contact pen 1 conveniently is housed in the aperture 23, thereby reducing the possibility that the contact pen 1 will be lost during non use.

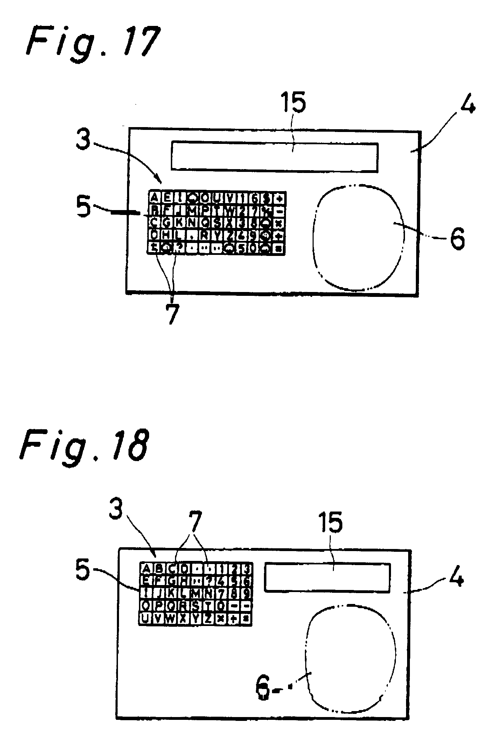

Fig. 17 is a simplified plane view of another embodiment of the invention. The output device 15 is integrally mounted in the housing 4. The shape of the housing 4, in which the character inputting unit 3 and the output device 15 are integrally composed, is in the form of a flat rectangular body. The output device 15 may be a liquid crystal display as mentioned above. According to such a composition, since the character inputting unit 3 and the output device 15 are integrally composed in a single housing , it is possible to confirm the inputted character information.

Fig. 18 is a simplified plane view of still another embodiment of the invention. Though the output device 15 is arranged at the upper portion of the inputting unit 3 in the embodiment shown in Fig. 17, the inputting unit 3 may be installed to the left of the output device as shown in Fig. 18.

According to still another embodiment of the invention, the vowel letters may be arranged not only horizontally or vertically, but also diagonally.

According to another embodiment of the invention, character inputted information is once stored in a memory 20 which is housed in the housing 4, thereby permitting the character inputting unit 3 to be used instead of a memorandum pad. Moreover, the data stored in the memory 20 can be visually displayed or printed out on a recording sheet 18 by providing the data to a visual display means 17 or a printing device 19 which is provided in a housing. The memory 20 may be housed in a card-like body and be removable from the housing 4. Alternately a connection terminal may be provided in the housing 4, thereby permitting the housing 4 to be connected to or disconnected from the visual display 17 or the printing device 19.

According to another embodiment of the invention, the character inputting switches 7 each may be a pressure sensor, a contact type sensor, utilizing electrostatic capacitance, a magnet detecting sensor or a proximity switch.

According to still another embodiment of the invention, the character inputting panels 5, 5a through 5c, and 26 through 29 are sized to conform to the hand of an operator, and to be suitable for the eyesight of the operator.

According to another embodiment of the invention, the contact pen 1 may be connected to the processing circuit 16 by means of a flexible lead wire, and the character inputting panel 5 may be connected to the processing circuit 16, thereby causing characters to be inputted by contracting the contact pen 1 with the character inputting panel 5.

The visual display 17 may be effected by a liquid crystal device or a cathode ray tube or light emitting diodes. Thus, the character inputting panel and the visual displaying area are respectively formed in the displaying area of the visual display 17 and 17a. A transparent sheet-like switch is provided at the character inputting panel, and this transparent sheet-like switch is furnished with switching elements individually corresponding to many characters. Then, characters are displayed in accordance with each switching element. Thus, each character can be inputted by applying pressure to the panel at an appropriate point.

Also, the character inputting switches 7 may be composed so that a transparent sheet-like switch may be installed on the surface of a display area, such as a liquid crystal or cathode ray tube.

In the prior art, a key board on which the inputting operation is conducted using the tips of the fingers and the display device, such as a cathode ray tube, are separately provided and are connected via a flexible connection line. In such prior art configurations, the installation space becomes large, and it is necessary for an operator to repeatedly look back and forth between the key board and the display. Also, since the key board and the display are connected by a connection line, there is still another problem in that the signal transmission rate thereof may be lowered. The present invention can solve these problems.

## Claims

1. A character input device comprising:
a flat housing (4) defining a planar top surface and a plurality of side surfaces;
a character input panel (5) located on said planar top surface of said flat housing, said character input panel including a plurality of character input pads (7) each having indicia thereon corresponding to characters, said character input pads extending in rows along said length of said top planar surface and in columns along said width of said top planar surface;
a contact pen (1) having an elongated shape and first and second end portions, said first end portion having a rounded end point for individually contacting said plurality of character input pads (7);
a plurality of switch means, respectively coupled to and associated with said plurality of character input pads (7) and located within said flat housing (4) for switching in response to contact between an associated one of said plurality of character input pads and said rounded end point of said contact pen (1);
a display means (15,17a), located within said flat housing (4), for displaying on a display panel the characters corresponding to the plurality of character input pads (7) which have made contact with said rounded end point of said contact pen (1), said display panel being located on said planar top surface of said housing,
a processor means (32), coupled to said display means (15,17a) and to said plurality of switch means and located within said flat housing (4), for controlling the display of the characters by said display means in response to the switching of said plurality of switch means; characterized in that
the characters are alphanumeric characters;
that each of said character input pads (7) has a length between 2 mm and 5 mm inclusive and a width between 2 mm and 5 mm inclusive, and wherein a distance between adjacent character input pads is between 0 mm and about 1 mm, wherein respective character input pads, which include indicia denoting each vowel character A, E, I, O and U, are aligned in a row or column, and wherein respective character input pads, which include indicia denoting each consonant character, are aligned in columns or rows, beneath or beside each respective vowel character, respectively;
that memory means (33) are provided which are coupled to said processing means and located within said flat housing, for storing the alphanumeric characters corresponding to the plurality of character input pads which have made contact with said rounded end point of said contact pen (1), and
that output terminal means (35) are provided which are coupled to said processing means (32) and having terminals located at a side surface of said flat housing (4), for detachably electrically connecting to an output device and for outputting the alphanumeric characters stored in said memory means to the output device, said processor means including means for controlling said memory means and said output terminal means.

2. A character input device according to claim 1, characterized in that said planar top surface of said flat housing (4) further includes indicia denoting a hand placement section (6) located to the right of said character input panel (5) and said display panel (15,17a), wherein a hand of an operator grasping said contact pen (1) is rested and stationary on said hand displacement section of said planar top surface during operation of the character input device.

3. A character input device according to claim 1 or 2, characterized in that said flat housing (4) includes an aperture means (23) for storing said contact pen (1) during nonuse of the character input device, said aperture means defining an opening in one of said plurality of side surfaces of said flat housing and a cylindrical aperture extending from said opening dimensioned to accommodate said contact pen within said flat housing.

4. A character input device according to any of the claims 1-3, characterized in that the indicia denoting each consonant are arranged in alphabetical order.

5. A character input device according to any of the claims 1-4, characterized in that said display panel (17a) is located on said planar top surface of said flat housing (4) below said character input panel (5).

6. A character input device according to any of the claims 1-5, characterized in that said planar top surface of the housing (4) of the character input device has a length of about 8.5 cm and a width of about 5.4 cm.

7. A character input apparatus comprising:
a character input device (3) comprising:
a flat housing (4) defining a planar top surface and a plurality of side surfaces of the housing;
a character input panel (5) located on said planar top surface of said flat housing, said character input panel including a plurality of character input pads (7) each having indicia thereon corresponding to characters, said character input pads extending in rows along said length of said top planar surface and in columns along said width of said top planar surface;
a contact pen (1) having an elongated shape and first and second end portions, said first end portion having a rounded end point for individually contacting said plurality of character input pads (7);
a plurality of switch means, respectively coupled to and associated with said plurality of character input pads (7) and located within said flat housing (4) for switching in response to contact between an associated one of said plurality of character input pads and said rounded end point of said contact pen (1);
a display means (15,17a), located within said flat housing (4), for displaying on a display panel the characters corresponding to the plurality of character input pads (7) which have made contact with said rounded end point of said contact pen (1), said display panel being located on said planar top surface of said flat housing;
a processor means (32), coupled to said display means (15,17a) and to said plurality of switch means and located within said flat housing (4), for controlling the display of the characters by said display means in response to the switching of said plurality of switch means;
characterized in that
the characters are alphanumeric characters;
that each of said character input pads (7) has a length between 2 mm and 5 mm inclusive and a width between 2 mm and 5 mm inclusive, and wherein a distance between adjacent character input pads is between 0 mm and about 1 mm, wherein respective character input pads,which include indicia denoting each vowel character A, E, I, O and U, are aligned in a row or column, and wherein respective character input pads,which include indicia denoting each consonant character, are aligned in columns or rows, beneath or beside each respective vowel character, respectively;
that memory means (33) are provided which are coupled to said processing means and located within said flat housing, for storing the alphanumeric characters corresponding to the plurality of character input pads which have made contact with said rounded end point of said contact pen (1); and
that output terminal means (35) are provided which are coupled to said processing means (32) and having terminals located at a side surface of said flat housing, for detachably electrically connecting to an output device (36) and for outputting the alphanumeric characters stored in said memory means (33) to the output device, said processor means including means for controlling said memory means and said output terminal means; and
in that the alphanumeric characters input apparatus further comprises:
an output device (36) for detachably electrically connecting to said alphanumeric character input device and for reading alphanumeric characters stored in said portable alphanumeric character input device, said output device including a housing (39) having an aperture (40) formed in a surface thereof, said aperture dimensioned to receive said portable alphanumeric character input device, said output device further including a display (41) for displaying the alphanumeric characters read from said alphanumeric character input device (3); and
a printer device (42), operatively coupled to said output device for printing the alphanumeric characters read by said output device (36).

## Patentansprüche

1. Zeicheneingabeeinheit umfassend
- ein flaches Gehäuse (4) mit einer ebenen oberen Fläche und einer Anzahl von Seitenflächen;
- ein Zeicheneingabefeld (5), das auf der ebenen oberen Fläche des flachen Gehäuses angeordnet ist, und eine Vielzahl von Zeicheneingabetasten (7) aufweist, auf deren Oberfläche den Zeichen entsprechende Symbole angebracht sind, wobei sich die Zeicheneingabetasten in Zeilen in Längsrichtung der ebenen oberen Fläche und in Spalten in Querrichtung der ebenen oberen Fläche erstrecken;
- einen Kontaktstift (1) länglicher Gestalt mit einem ersten und einem zweiten Endabschnitt, wobei der erste Endabschnitt eine abgerundete Spitze aufweist, um die Vielzahl von Zeicheneingabetasten (7) einzeln kontaktieren zu können;
- eine Vielzahl von Schalteinheiten, die im Innern des flachen Gehäuses (4) untergebracht sind, an die Vielzahl der Zeicheneingabetasten (7) gekoppelt und mit diesen verbunden sind, um in Abhängigkeit eines Kontakts zwischen einer der Zeicheneingabetasten (7) und der abgerundeten Spitze des Kontaktstifts zu schalten;
- eine in dem flachen Gehäuse (4) untergebrachte Anzeigeeinheit (15, 17a), wobei um einzelne Zeichen, die denjenigen aus der Vielzahl der Zeicheneingabetasten (7) entsprechen, die von der abgerundeten Spitze des Kontaktstifts (1) kontaktiert wurden, auf einem Anzeigedisplay anzuzeigen, dieses Anzeigedisplay auf der ebenen oberen Fläche des Gehäuses angebracht ist;
- einen in dem flachen Gehäuse (4) untergebrachten Prozessor (32), der mit der Anzeigeeinheit (15, 17a) und der Vielzahl der Schalteinheiten verbunden ist, um die Anzeige der Zeichen durch die Anzeigeeinheit in Abhängigkeit von dem Schalten der Schalteinheiten zu steuern;
dadurch gekennzeichnet,
- daß die Zeichen alphanumerische Zeichen sind;
- daß jede der Zeicheneingabetasten (7) eine Länge zwischen 2 mm und 5 mm und eine Breite zwischen 2 mm und 5 mm aufweist, wobei der Abstand zwischen benachbarten Zeicheneingabetasten zwischen 0 mm und 1 mm beträgt, und wobei einzelne Zeicheneingabetasten (7), die mit den Symbolen von Vokalen a, e, i, o und u versehen sind, in einer Zeile oder einer Spalte angeordnet sind, und wobei einzelne Zeicheneingabetasten (7), die mit den Symbolen der Konsonanten versehen sind, in Zeilen oder Spalten angeordnet sind, wobei diese Zeilen oder Spalten unterhalb oder seitlich von den entsprechenden Vokalsymbolen angeordnet sind;
- daß ein Datenspeicher (33) mit dem Prozessor (32) verbunden und im Innern des flachen Gehäuses (4) untergebracht ist, um die alphanumerischen Zeichen zu speichern, die der Vielzahl von Zeicheneingabetasten (7) entsprechen, die mit der abgerundeten Spitze des Kontaktstifts (1) in Kontakt gekommen sind, und
- daß ein Ausgabeanschluß (35) mit dem Prozessor (32) verbunden ist, der Ausgänge an einer der Seitenflächen des flachen Gehäuses (4) aufweist, um eine abnehmbare elektrische Verbindung zu einer Ausgabeeinheit herzustellen und um die in dem Datenspeicher gespeicherten alphanumerischen Zeichen an die Ausgabeeinheit zu übergeben, wobei der Prozessor (32) eine Vorrichtung aufweist, um den Datenspeicher (33) und den Ausgabeanschluß (35) zu kontrollieren.

2. Zeicheneingabeeinheit nach Anspruch 1, dadurch gekennzeichnet, daß die ebene obere Fläche des flachen Gehäuses (4) weiterhin Anzeichen aufweist, die eine Handabstützfläche (6) kennzeichnen, die auf der rechten Seite des Zeicheneingabefelds (5) und des Anzeigedisplays (15, 17a) angeordnet ist, wobei die Hand eines Benutzers, die den Kontaktstift hält, auf der Handabstützfläche (6) auf der ebenen oberen Fläche ruhen und sich während des Betriebs der Zeicheneingabeeinheit abstützen kann.

3. Zeicheneingabeeinheit nach einem der Ansprüche 1 oder 2, dadurch gekennzeichnet, daß das flache Gehäuse (4) eine Aufnahme (23) für die Unterbringung des Kontaktstiftes (1) aufweist, für die Zeit, in der die Zeicheneingabeeinheit nicht benutzt wird, wobei die Aufnahme (23) als Öffnung in einer der Seitenflächen des flachen Gehäuses (4) ausgeführt ist, einen zylindrischen Querschnitt aufweist und sich von der Öffnung in das Innere des Gehäuses erstreckt und so eine Möglichkeit schafft, den Kontaktstift (1) im Innern des Gehäuses (4) unterzubringen.

4. Zeicheneingabeeinheit nach einem der Ansprüche 1 bis 3, dadurch gekennzeichnet, daß die Symbole, die die Konsonanten bezeichnen, in alphabetischer Reihenfolge angeordnet sind.

5. Zeicheneingabeeinheit nach einem der Ansprüche 1 bis 4, dadurch gekennzeichnet, daß das Anzeigedisplay (17a) auf der ebenen oberen Fläche des flachen Gehäuses (4) unterhalb des Zeicheneingabefelds (5) angeordnet ist.

6. Zeicheneingabeeinheit nach einem der Ansprüche 1 bis 5, dadurch gekennzeichnet, daß die ebene obere Fläche des Gehäuses (4) der Zeicheneingabeeinheit eine Länge von ungefähr 8,5 cm und eine Breite von ungefähr 5,4 cm aufweist.

7. Eine Vorrichtung zur Zeicheneingabe umfassend:
eine Zeicheneingabeeinheit umfassend
- ein flaches Gehäuse (4) mit einer ebenen oberen Fläche und einer Anzahl von Seitenflächen;
- ein Zeicheneingabefeld (5), das auf der ebenen oberen Fläche des flachen Gehäuses angeordnet ist, und eine Vielzahl von Zeicheneingabetasten (7) aufweist, auf deren Oberfläche den Zeichen entsprechende Symbole angebracht sind, wobei sich die Zeicheneingabetasten in Zeilen in Längsrichtung der ebenen oberen Fläche und in Spalten in Querrichtung auf der ebenen oberen Fläche erstrecken;
- einen Kontaktstift (1) länglicher Gestalt mit einem ersten und einem zweiten Endabschnitt, wobei der erste Endabschnitt eine abgerundete Spitze aufweist, um die Vielzahl von Zeicheneingabetasten (7) einzeln kontaktieren zu können;
- eine Vielzahl von Schalteinheiten, die im Innern des flachen Gehäuses (4) untergebracht sind, an die Vielzahl der Zeicheneingabetasten (7) gekoppelt und mit diesen verbunden sind, um in Abhängigkeit eines Kontakts zwischen einer der Zeicheneingabetasten (7) und der abgerundeten Spitze des Kontaktstifts zu schalten;
- eine in dem flachen Gehäuse (4) untergebrachte Anzeigeeinheit (15, 17a), wobei um einzelne Zeichen, die denjenigen aus der Vielzahl der Zeicheneingabetasten (7) entsprechen, die von der abgerundeten Spitze des Kontaktstifts (1) kontaktiert wurden, auf einem Anzeigedisplay anzuzeigen, dieses Anzeigedisplay auf der ebenen oberen Fläche des Gehäuses angebracht ist;
- einen in dem flachen Gehäuse (4) untergebrachten Prozessor (32), der mit der Anzeigeeinheit (15, 17a) und der Vielzahl der Schalteinheiten verbunden ist, um die Anzeige der Zeichen durch die Anzeigeeinheit in Abhängigkeit von dem Schalten der Schalteinheiten zu steuern;
dadurch gekennzeichnet,
- daß die Zeichen alphanumerische Zeichen sind;
- daß jede der Zeicheneingabetasten (7) eine Länge zwischen 2 mm und 5 mm und eine Breite zwischen 2 mm und 5 mm aufweist, wobei der Abstand zwischen benachbarten Zeicheneingabetasten zwischen 0 mm und 1 mm beträgt, und wobei einzelne Zeicheneingabetasten (7), die mit den Symbolen von Vokalen a, e, i, o und u versehen sind, in einer Zeile oder einer Spalte angeordnet sind, und wobei einzelne Zeicheneingabetasten (7), die mit den Symbolen der Konsonanten versehen sind, in Zeilen oder Spalten angeordnet sind, wobei diese Zeilen oder Spalten unterhalb oder seitlich von den entsprechenden Vokalsymbolen angeordnet sind;
- daß ein Datenspeicher (33) mit dem Prozessor (32) verbunden und im Innern des flachen Gehäuses (4) untergebracht ist, um die alphanumerischen Zeichen zu speichern, die der Vielzahl von Zeicheneingabetasten (7) entsprechen, die mit der abgerundeten Spitze des Kontaktstifts (1) in Kontakt gekommen sind, und
- daß ein Ausgabeanschluß (35) mit dem Prozessor (32) verbunden ist, der Ausgänge an einer der Seitenflächen des flachen Gehäuses (4) aufweist, um eine abnehmbare elektrische Verbindung zu einer Ausgabeeinheit herzustellen und um die in dem Datenspeicher gespeicherten alphanumerischen Zeichen an die Ausgabeeinheit zu übergeben, wobei der Prozessor (32) eine Vorrichtung aufweist, um den Datenspeicher (33) und den Ausgabeanschluß (35) zu kontrollieren, und
- daß die Vorrichtung zur Zeicheneingabe weiterhin umfaßt:
- eine Ausgabeeinheit (36), die elektrisch lösbar mit der alphanumerischen Zeicheneingabeeinheit (3) verbunden ist, und die für das Auslesen der alphanumerischen Zeichen, die in der tragbaren alphanumerischen Zeicheneingabeeinheit (3) gespeichert sind, ein Gehäuse (39) mit einem Eingabeschlitz (40) in einer dessen Außenflächen umfaßt, wobei der Eingabeschlitz (40) eine entsprechende Größe hat, um die tragbare Zeicheneingabeeinheit (3) aufzunehmen, und wobei die Ausgabeeinheit (36) weiterhin ein Anzeigedisplay (41) umfaßt, um die alphanumerischen Zeichen anzuzeigen, die aus der alphanumerischen Zeicheneingabeeinheit (3) ausgelesen wurden; und
- eine Druckeinheit (42), die mit der Ausgabeeinheit (36) verbunden ist, um die alphanumerischen Zeichen zu drucken, die von der Ausgabeeinheit (36) gelesen wurden.

## Revendications

1. Dispositif d'entrée de caractères comprenant:
un boîtier plat (4) définissant une surface supérieure planaire et une pluralité de surfaces latérales;
un panneau d'entrée de caractères (5) situé sur ladite surface supérieure planaire dudit boîtier plat, ledit panneau d'entrée de caractères comprenant une pluralité de touches d'entrée de caractères (7) ayant chacune sur elle des signes correspondant à des caractères, lesdites touches d'entrée de caractères s'étendant en rangées sur ladite longueur de ladite surface planaire supérieure et en colonnes sur ladite largeur de ladite surface planaire supérieure;
un stylet de contact (1) de forme allongée ayant des première et deuxième parties d'extrémité, ladite première partie d'extrémité ayant une pointe d'extrémité arrondie pour venir individuellement au contact de ladite pluralité de touches d'entrée de caractères (7);
une pluralité de moyens de commutation respectivement couplés et associés à ladite pluralité de touches d'entrée de caractères (7) et situés dans ledit boîtier plat (4) pour effectuer une commutation en réponse à un contact entre une touche associée parmi ladite pluralité de touches d'entrée de caractères et ladite pointe d'extrémité arrondie dudit stylet de contact (1);
des moyens d'affichage (15, 17a) situés dans ledit boîtier plat (4) pour afficher, sur un panneau d'affichage, les caractères correspondant à la pluralité de touches d'entrée de caractères (7) qui ont établi un contact avec ladite pointe d'extrémité arrondie dudit stylet de contact (1), ledit panneau d'affichage étant situé sur ladite surface supérieure planaire dudit boîtier,
un moyen formant processeur (32) couplé audit moyen d'affichage (15, 17a) et à ladite pluralité de moyens de commutation et situé dans ledit boîtier plat (4), pour commander l'affichage des caractères par lesdits moyens d'affichage, en réponse à la commutation de ladite pluralité de moyens de commutation
caractérisé en ce que
les caractères sont des caractères alphanumériques;
chacune desdites touches d'entrée de caractères (7) a une longueur entre 2 mm et 5 mm, limites comprises, et une largeur entre 2 mm et 5 mm, limites comprises, et dans lequel la distance entre des touches d'entrée de caractères adjacentes est comprise entre 0 mm et à peu près 1 mm, dans lequel des touches d'entrée de caractères respectives, comprenant un signe désignant chaque caractère de voyelle A, E, I, O et U, sont alignées en rangée ou en colonne, et dans lequel des touches d'entrée de caractères respectives, comprenant un signe désignant chaque caractère de consonne, sont alignées en colonnes ou en rangées, respectivement au-dessous et à côté de chaque caractère de voyelle respectif;
des moyens de mémorisation (33) sont prévus, couplés audit moyen de traitement et situés dans ledit boîtier plat, pour stocker les caractères alphanumériques correspondant à la pluralité de touches d'entrée de caractères qui ont établi un contact avec ladite pointe d'extrémité arrondie dudit stylet de contact (1), et
il est prévu des moyens formant borne de sortie (35), couplés audit moyen de traitement (32), ayant des bornes situées sur une surface latérale dudit boîtier plat (4), pour assurer une connexion électrique amovible à un dispositif de sortie et pour envoyer les caractères alphanumériques stockés dans ledit moyen de mémorisation au dispositif de sortie, ledit moyen de traitement comprenant un moyen pour commander ledit moyen de mémorisation et ledit moyen formant borne de sortie.

2. Dispositif d'entrée de caractères selon la revendication 1, caractérisé en ce que ladite surface supérieure planaire dudit boîtier plat (4) comprend en outre un signe désignant une section de placement de main (6) située à droite dudit panneau d'entrée de caractères (5) et dudit panneau d'affichage (15, 17a) sur laquelle la main d'un opérateur saisissant ledit stylet de contact (1) est posée et stationnaire sur ladite section de déplacement de main de ladite surface supérieure planaire, durant le fonctionnement du dispositif d'entrée de caractères.

3. Dispositif d'entrée de caractères selon la revendication 1 ou 2. caractérisé en ce que ledit boîter plat (4) comprend unmoyen formant ouverture (23) pour stocker ledit stylet de contact (1) durant la non utilisation du dispositif d'entrée de caractères,ledit moyen formant ouverture définissant une ouverture dans une surface de ladite pluralité de surfaces latérales dudit boîtier plat et une ouverture cylindrique s'étendant depuis ladite ouverture, dimensionnée pour loger ledit stylet de contact de contact dans ledit boîtier plat.

4. Dispositif d'entrée de caractères selon l'une quelconque des revendications 1 à 3, caractérisé en ce que les indices désignant chaque consonne sont disposés dans l'ordre alphabétique.

5. Dispositif d'entrée de caractères selon l'une quelconque des revendications 1 à 4, caractérisé en ce que ledit panneau d'affichage (17a) est situé sur ladite surface supérieure planaire dudit boîtier plat (4), au-dessous dudit panneau d'entrée de caractères (5).

6. Dispositif d'entrée de caractères selon l'une quelconque des revendications 1 à 5, caractérisé en ce que ladite surface supérieure planaire du boîtier (4) du dispositif d'entrée de caractères a une longueur d'à peu près 8,5 cm et une largeur d'à peu près 5,4 cm.

7. Dispositif d'entrée de caractères comprenant:
un dispositif d'entrée de caractères (3) comportant:
un boîtier plat (4) définissant une surface supérieure planaire et une pluralité de surfaces latérales du boîtier;
un panneau d'entrée de caractères (5) situé sur ladite surface supérieure planaire dudit boîtier plat, ledit panneau d'entrée de caractères comprenant une pluralité de touches d'entrée de caractères (7) ayant chacune sur elle des signes correspondant à des caractères, lesdites touches d'entrée de caractères s'étendant en rangées sur ladite longueur de la dite surface planaire supérieure et en colonnes sur ladite largeur de ladite surface planaire supérieure;
un stylet de contact (1) de forme allongée, des première et deuxième parties d'extrémité, ladite première partie d'extrémité ayant une pointe d'extrémité arrondie pour venir individuellement au contact de ladite pluralité de touches d'entrée de caractères (7);
une pluralité de moyens de commutation respectivement couplés et associés à ladite pluralité de touches d'entrée de caractères (7) et situés dans ledit boîtier plat (4) pour effectuer une commutation en réponse à un contact entre une touche associée parmi ladite pluralité de touches d'entrée de caractères et ladite pointe d'extrémité arrondie dudit stylet de contact (1);
un moyen d'affichage (15, 17a) situé dans ledit boîtier plat (4), pour afficher sur un panneau d'affichage les caractères correspondant à la pluralité de touches d'entrée de caractères (7) qui ont établi un contact avec ladite pointe d'extrémité arrondie dudit stylet de contact (1), ledit panneau d'affichage étant situé sur ladite surface supérieure planaire dudit boîtier plat;
un moyen de traitement (32) couplé audit moyen d'affichage (15, 17a) et à ladite pluralité de moyens de commutation et situé dans ledit boîtier plat (4), pour commander l'affichage des caractères par ledit moyen d'affichage en réponse à la commutation de ladite pluralité de moyens de commutation;
caractérisé en ce que
les caractères sont des caractères alphanumériques;
chacune desdites touches d'entrée de caractères (7) a une longueur entre 2 mm et 5mm, limites comprises, et une largeur entre 2 mm et 5 mm, limites comprises, et dans lequel la distance entre des touches d'entrée de caractères adjacentes est comprise entre 0 mm et à peu près 1 mm, dans lequel des touches d'entrée de caractères respectives, comprenant un signe désignant chaque caractère ce voyelle A, E, I, O et U, sont alignées en rangée ou en colonne, et dans lequel des touches d'entrée de caractères respectives, comprenant un signe désignant chaque caractère de consonne, sont alignées en colonnes ou en rangées respectivement au-dessous et à côté de chaque caractère de voyelle respectif;
il est prévu des moyens de mémorisation (33) couplés audit moyen de traitement et situés dans ledit boîtier plat, pour stocker les caractères alphanumériques correspondant à la pluralité de touches d'entrée de caractères qui ont établi un contact avec ladite pointe d'extrémité arrondie dudit stylet de contact (1); et
il est prévu des moyers formant borne de sortie (35), couplés audit moyen de traitement (32) et ayant des bornes situées sur une suface latérale dudit boîtier plat, pour assurer une connexion électrique amovible à un dispositif de sortie (36) et pour envoyer les caractères alphanumériques stockés dans ledit moyen de mémorisation (33) au dispositif de sortie, ledit moyen de traitement comprenant un moyen pour commander ledit moyen de mémorisation et ledit moyen formant borne de sortie ; et
le dispositif d'entrée de caractères alphanumériques comprend en outre :
un dispositif de sortie (36), pour assurer une connexion électrique amovible audit disposif d'entrée de caractères alphanumériques et pour lire les caractères alphanumériques stockés dans ledit dispositif portable d'entrée de caractères alphanumériques, ledit dispositif de sortie comprenant un boîtier (39) ayant une ouverture (40) formée dans sa surface, ladite ouverture étant dimensionnée pour loger ledit dispositif portable d'entrée de caractères alphanumériques, ledit dispositif de sortie comprenant en outre un affichage (41) pour afficher les caractères alphanumériques lus par ledit dispositif d'entrée de caractères alphanumériques (3); et
un dispositif d'impression (42) couplé en fonctionnement audit dispositif de sortie pour imprimer les caractères alphanumériques lus par ledit dispositif de sortie (36).
